# EUROPEAN PATENT SPECIFICATION

(11) **EP 0 876 008 B1**
(45) Date of publication and mention of the grant of the patent: **14.09.2005**
(21) Application number: 97400999.5
(22) Date of filing: 02.05.1997
(51) Int. Cl.: H04B 7/26

(54) **Adaptive data rate TDMA/CDMA communications system**
TDMA/CDMA Nachrichtenübertragungssystem mit anpassbarer Datenrate
Système de communication à AMDT/AMDC avec taux de transmission de données adaptatif

(43) Date of publication of application: 04.11.1998
(73) Proprietor: SIEMENS AKTIENGESELLSCHAFT, 80333 München (DE); FRANCE TELECOM, 75015 Paris (FR)
(72) Inventor: Nasshan, Markus, 46395 Bocholt (DE); Klein, Anja, 80999 München (DE); Girard, Laurent, 75012 Paris (FR); Boullé, Kitty, 75013 Paris (FR)
(74) Representative: Eidelsberg, Victor Albert

(56) References cited:
- EP-A- 0 571 745
- EP-A- 0 658 991
- EP-A- 0 680 168
- WO-A-93/15573
- WO-A-96/22639

## Description

### Field of the invention

The present invention relates to a method and an apparatus for adapting a bit rate of a communication link in a digital mobile communication system.

Digital mobile communication systems comprise a plurality of base stations distributed in a way to cover the area of interest and to form a cellular network. The base stations are linked to a switching network which may connect the mobile communications system to a public switched telephone network (PSTN) or any other network. The base stations establish communication links to mobile stations which move freely inside the mobile communication system and will be handed over to an other base station in case they leave the present cell.

A radio interface with frequency channels for user signals transmitted from a transmitting station to a receiving station forms the communication link between a mobile station and a base station. The communication links in the communication system allow the exchange of any digital data and/or speech data.

In order to separate the user signals on the radio interface TDMA (time division multiple access), FDMA (frequency division multiple access) or CDMA (code division multiple access) techniques are used. The well known GSM (global system for mobile communications) system uses TDMA/FDMA and e.g. the IS-95 system uses CDMA/FDMA.

A future mobile communication system may use an other combination of the multiple access techniques. From T.Ojanperä, K.Rikkinen, H.Häkkinen, K.Pehkonen, A.Hottinen and J.Lilleberg, "Design of a 3rd generation multirate CDMA system with multiuser detection, MUD-CDMA", proceedings of the 1996 IEEE 4^{th} International Symposium on Spread Spectrum Techniques and Applications, Mainz, 1996, p. 334-338, a proposal for CDMA/FDMA system is know which introduces variable spreading gains to achieve variable bit rates of the communication links. this proposal does not fit with the GSM system infra-structure because soft handover and fast power control are required for the proposed system.

WO 9315573A (D1), discloses that the format of the data transmitted can be adapted dynamically according to the nature of the traffic to be carried (page 5, lines 10 - 27) and indicates that a feature of the MDMA protocol is that of dynamic allocation of time-slots and CDMA channels, by possible modification of the protocol (page 31, lines 15 - 31).

### Objective of the invention

An objective of the present invention is therefore to identify a method and an apparatus for adapting a rate of communicating data via digital user signals of a communication link in a digital mobile communication system without requiring soft handover and fast power control. The objective is achieved by the method according to Patent claim 1 and apparatus according to Patent claim 8.

### Disclosure of the invention

According to the invention, a communication link between a transmitting and a receiving station for digital user signals is set up in a TDMA/CDMA digital mobile communication system. The digital user signals are separated from user signals communicated on other communication links by individual spreading codes and/or different time slots. In order to adapt a rate of communicating data on said communication link the method comprises the steps as defined in claim 1.

This flexible adaptation of the bit rate facilitates the introduction of a future digital mobile communication system, like UMTS (Universal Mobile Telecommunications System) or FPLMTS (Future Public Land Mobile Telecommunications System).

Further advantageous characteristics are subject of the dependent claims.

The method according to the invention is advantageously developed in such a manner that, during a communication a request for a new bit rate is signalled, and the number of the time slots M or the spreading factor Q of the communication link is updated for a receiving station with only TDMA capability or CDMA capability, respectively. For a receiving station with both TDMA and CDMA capability, the number M of time slots and/or the spreading factor Q can be updated. Based on the knowledge of the individual capabilities of the mobile stations an update of the radio interface parameters (M, Q) for any communication link is performed in order to achieve the new bit rate.

The receiving station can recognize the parameter change, but advantageously the number of time slots M and/ or the new spreading factor Q is signalled to the receiving station.

The spreading factor is set to 1 in case a station with only TDMA capability is served. By doing so a TDMA/FDMA transmission is achieved. This facilitates a reduction in the amplitude variations of the transmitted signal.

In addition to allocating more time slots M or smaller spreading factors Q to a communication link, it is also possible to allocate two or more spreading codes to a user, so that the bit rate for this user is further increased. By combining all these methods a very flexible communication system is established which allows a gradual adaption of the bit rate according to the required service so that the resources of the radio interface are not wasted.

According to a further refinement of the invention, all chips are of equal duration. This allows a fixed clock frequency to be applied for spreading all the communicating signals so that transmission and reception of these signals is facilitated.

### Brief Description of the Drawings

The invention will now be illustrated more detailed, with reference to a prefered but not limiting embodiment together with the enclosed drawings, wherein:
- figure 1: represents a general view of a digital mobile communication system,
- figure 2: describes a frame and burst structure of a TDMA/CDMA digital mobile communication system,
- figure 3: describes a frame and burst structure with communication links of different bit rate,
- figure 4a,b: describes a burst structure with different bit rates,
- figure 5: describes a frame and burst structure with different spreading factors, and
- figure 6: represents a general view of a base station.

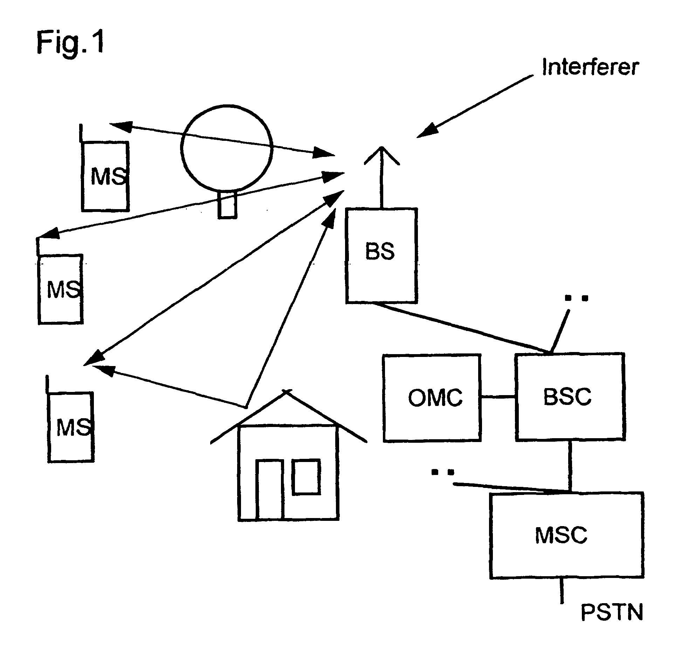

The digital mobile communication system according to Fig. 1 comprises a mobile switching center MSC in which an interworking unit IWF is integrated in order to implement an interface to a public switched telephone network PSTN. A split of the digital mobile communication system into regional sectors is achieved by way of a plurality of mobile switching centers MSC each of which is associated with a regional sector, and which are networked to each other, within each regional sector, a mobile switching center MSC is linked to base stations BS via base station controllers BSC.

Each base station BS serves an individual cell. The digital mobile communication system has a cellular structure wherein hierarchical cells (macro, micro, pico cells) are served by one or different base stations BS. The links between the individual fixed components MSC, BSC, BS of the digital mobile communication system up to and including the base station BS are normally produced by lines. This structure of a digital mobile communication system is illustrative of a possible environment, in which a radio interface shortly to be described may be used. Another function split between different system components may also be chosen.

The structure of the digital mobile communication system shown in Fig. 1. serves to provide communication of a plurality of mobile stations MS. These mobile stations MS are linked to the base stations BS via a radio interface, thereby providing the mobile stations MS with a facility for mobile communication. The base station BS operate to provide radio communications within a radio coverage associated with a cell. However, as a rule the base station BS may provide radio coverage beyond the cell boundary area associated with an individual base station BS.

The radio interface between a particular base station BS and the three mobile stations MS according to Fig. 1 is typically distorted by a multipath propagation, which resultes in interferences between transmitted symbols and by interference from user signals of different communication links. The following will describe the radio interface of the downlink, the link from the base station BS to the mobile stations MS. The uplink is formed in a equivalent way and can employ the same transmitting scheme.

An operation and maintenance center OMC is connected to a base station controller BSC and fulfills operation and maintenance functions for the base station controller BSC and the base stations BS linked to this base station controller BSC. Information about faults and the traffic load of these components are provided to the operation and maintenance center OMC so that the operator will be warned. Whenever possible, the system adapts its configuration so as to provide continuous operation. The base station controller BSC performs radio processing functions, local call processing functions, local safeguarding and operation and maintenance functions. A major task is the management of the radio resources of the base stations BS. The base station controller BSC controls the base station BS to allocate the radio resources to the mobile stations MS and their user signals.

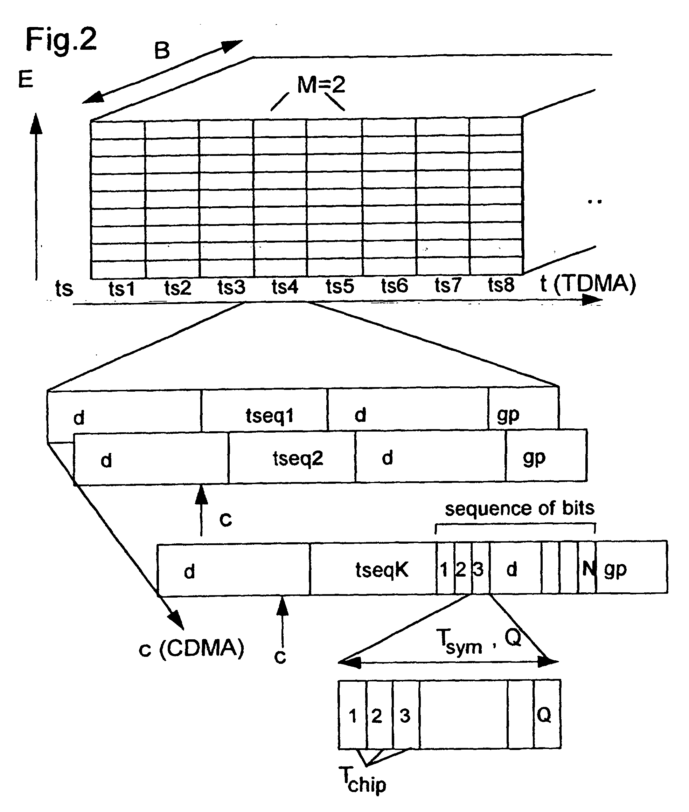

In Fig. 2, the frame and burst structure of the radio interface of a TDMA/CDMA communication system is shown. A TDMA user separation is established by a number of time slots ts. As an exemple 8 time slots form a frame. Each user signal is transmitted in one or more time slots ts. The bandwith B of the radio interface refers to a broadband frequency channel of e.g. 1,6 MHz for each time slot ts. An additional FDMA component may be introduced allocating more than one frequency channel to a particular base station BS.

It is possible to allocate two or more user signals to a time slot ts by using a CDMA user separation. A number of user signals can be transmitted in a single time slot ts which are separated by different CDMA codes c (spreading codes).

A transmitted burst consists of two half bursts with data symbols d which are separated by a training sequence tseq1, tseq2,..,tseqK. The training sequences tseq1, tseq2,..,tseqK are specific for the K signals and are used for channel estimation. They are not necessarily required for the implementation of the invention. A guard period gp at the end of the burst prevents possible collisions between data symbols d of succesive bursts, as a result of different path lengths between mobile stations MS and base station BS caused by multipath propagation with different signal delays.

The CDMA codes c consist of chips of constant length T_{chip} wherein Q chips spread one data symbol of duration T_{sym}. The CDMA codes c are also known on the receiver side so that despreading and user separation can be performed.

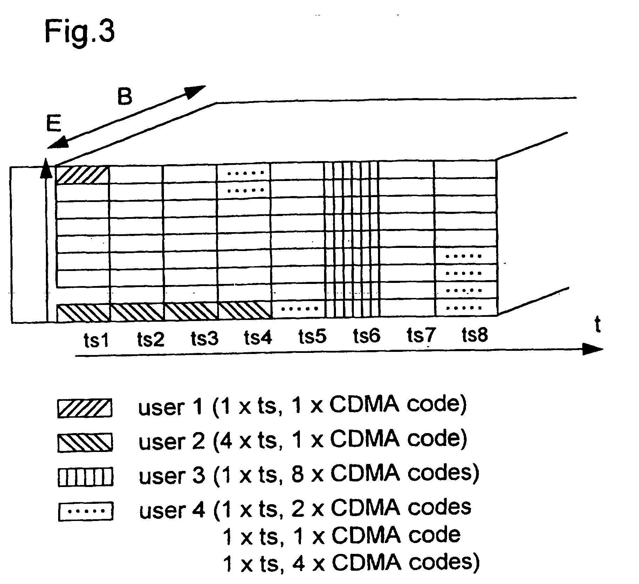

Referring to Fig. 3, an example of a state of the art allocation method for the radio resources is shown in order to ensure variable bit rates for different communication links according to a user specific need.

Time slot 1 and one CDMA code are assigned to user signals of user 1. Time slots ts1 to ts4 with one CDMA code and time slot ts6 with 8 CDMA codes are assigned to user signals of user 2 and 3 respectively. For user 4 a mixed assignment is chosen comprising time slot ts4 with 2 CDMA codes, time slot ts5 with 1 CDMA code and time slot ts8 with 4 CDMA codes. The more time slots ts and the more CDMA codes are assigned to a user, the higher the possible data communication rate (bit rate) for this user.

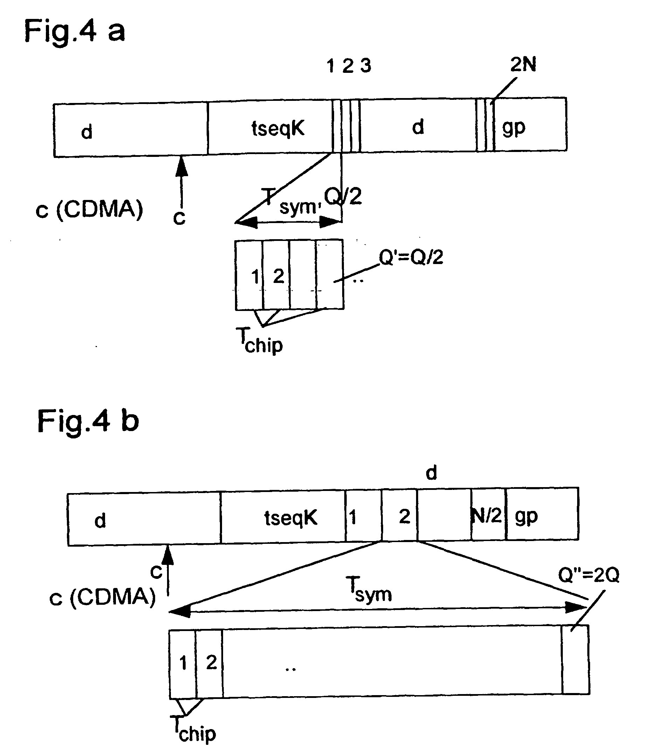

An alternative solution is a variation of the spreading factor Q according to Fig. 4a and 4b. A constant chip duration T_{chip} is assumed. The number of chips per data symbol d is adapted for a double bit rate compared to Fig. 2 by using a spreading factor of Q'=Q/2 . If the spreading factor (number of chips per symbol) is fixed at Q'=2Q the bit rate is halved. Since the burst duration and the chip duration T_{chip} are constant, the doubling or halving of the number of data symbols d per halfburst is equal to a variation of the bit rate.

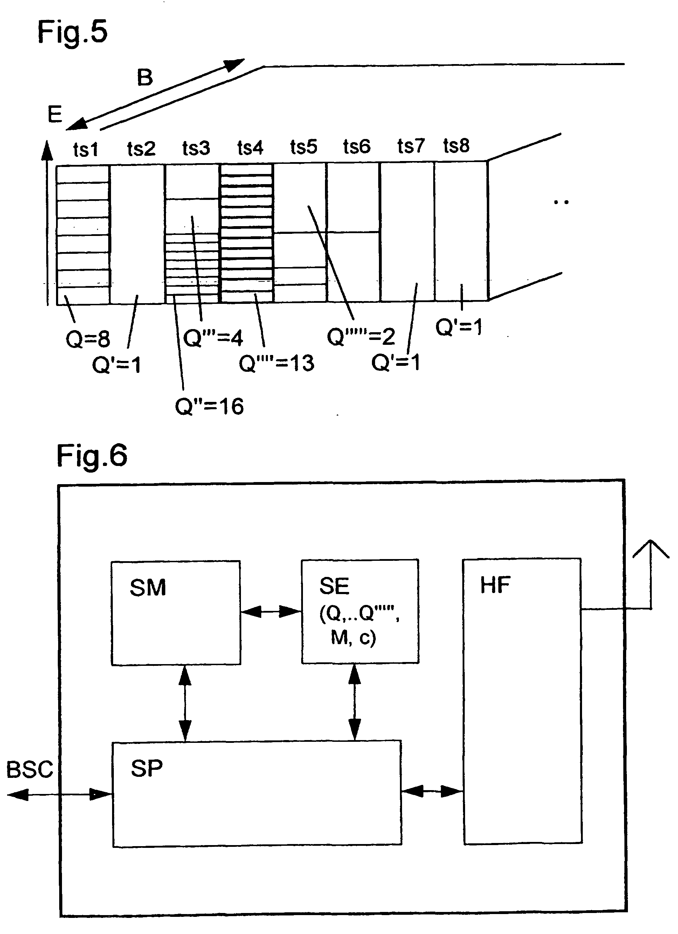

Fig. 5 shows an example of the flexible bit rate adaption according to the invention. There are six different spreading factors from 1 to 16 in use in this example. The spreading factor Q, Q', Q'',Q''',Q'''',Q''''' is no longer constant for all the time slots ts1 to ts8 but adapted to supply the need of individual communication links. The spreading factor Q, Q', Q'',Q''',Q'''',Q''''' can be different for different time slots ts or can be different for the user signals within one of the time slot ts1 to ts8 of a frame or both. This method, i.e. the use of variable spreading factors Q, Q', Q'',Q''', Q'''', Q''''', can also be combined with the above-mentioned method of allocating different numbers of CDMA codes c and/or time slots ts to a user.

The flexibility of the digital mobile communication system is enhanced since even non CDMA mobile stations MS can be served by using a spreading factor Q'=1, see time slots ts2, ts7, ts8. A further degree of freedom is introduced in a TDMA/CDMA digital mobile communication system associated with communication at different bit rates in combination with adapting to a change in the radio propagation environments. An increase of the spreading factor Q corresponds to an increase of energy with which the information is transmitted. With an increase of energy it is possible to achieve a better interference suppression.

The above described method is implemented in a base station BS shown in Fig. 6. The base station BS comprises signalling means SM, control means SE, signal processing means SP and transmission means HF.

The signal processing means SP, e.g. a digital signal processor operates to receive user signals from different communication links from the network via the base station controller BSC for communication to the mobile stations MS. The user signals have to be transmitted to the mobile stations MS. Additionally, signalling information is received which is processed by the signalling means SM, e.g. in order to detect requests for new bit rates for the sender which is connected via the network. The signalling means SM also supply the receiving station with relevant information about the used spreading factor and/or number of time slots depending on the required bit rate.

Control means SE, e.g. a digital processor with a memory device operates to process actual information about the spreading factors Q,...,Q''''', the CDMA codes c, and the number M and position of time slots ts allocated to each communication link. The control means SE operates to receive updated information concerning these parameters from the signalling means SM and controls the signal processing means SP in order to form the appropriate burst structure.

Communication of signalling information from and to the mobile stations MS is effective to determine the required bit rate and the operating capabilities of these mobile stations MS with regard to the capability of these mobile stations MS to operate with TDMA/CDMA features. The individual capability of each mobile station MS is stored either in the base station BS or the base station controller BSC after this capability has been signaled. The control means SE operates to select a parameter set (Q, M) in accordance with the required bit rate and the transmitting and receiving operating capabilities of the mobile station MS. The control means SE, further operates to allocate sequences of bits of the user signals to M time slots ts and form the Q individual spreading codes c. A communication can use two or more spreading codes c in order to increase the bit rate of the transmission.

The signal processing means SP processes the parameters (Q, M, c) and the user signal to be transmitted and spreads the sequences of bits with the chips. The spread user signals are received by the transmission means HF which forms a transmit signal, by combining the different sequences. After digital/analog conversion, filtering and power amplifying the transmit signal is transmitted in a burstwise manner.

A receiver in the receiving mobile station MS comprises equivalent components so that the received signals can be converted to a base band representation, sampled, analog/ digital converted, despread and the bits of the sequences detected. Well known JD (Joint Detection) techniques can be employed. For the uplink, a corresponding transmission method may be employed.

## Claims

1. Method for adapting a rate of communicating data via digital user signals communicated on a communication link between a transmitting (BS) and a receiving station (MS) which user signals are separated from signals communicated on other communication links by individual spreading codes (c) and/or different time slots (ts) in TDMA/CDMA digital mobile communication system,
comprising the steps of:
- selecting at least one spreading factor (Q,.. Q''''') and a number M of time slots (ts) according to the required bit rate and according to the individual receiving capabilities of a receiving station (MS), the spreading factor (Q,.. Q''''') being representative of a number of chips of a spreading code and M being representative of a number of time slots(ts) of the communication link,
- forming at least one individual spreading code with Q,.. Q''''' chips in accordance with the selected at least one spreading factor (Q,.. Q'''''),
- allocating sequences of bits of the user signal to the selected at least one time slot (ts),
- spreading the sequences of bits individually in accordance with the spreading code,
- forming a transmit signal by combining the sequences allocated to the at least one time slot (ts), and
- arranging for burstwise transmission of the transmit signal.

2. Method according to claim 1, comprising the step of signalling receiving capabilities concerning the TDMA/CDMA feature between the two stations (BS, MS) before selecting the at least one spreading factor (Q,.. Q''''') and the at least one time slots (ts).

3. Method according to claim 1 or 2,
wherein during a communication a request for a new bit rate is signaled, and
for a receiving station (MS) with only TDMA capability the number M of the time slots (ts) of the communication link are updated and for a receiving station (MS) with CDMA capability the spreading factors (Q, Q', Q''''') are updated.

4. Method according to claim 3,
wherein the new number M of the time slots (ts) and /or the new spreading factor (Q, ..Q''''') are signaled to the receiving station (MS).

5. Method according to claim 3 or 4,
wherein the spreading factor (Q,.. Q''''') for a station (MS) with only TDMA capability is set to 1.

6. Method according to one of the previous claims,
wherein two or more spreading codes are allocated to a user, so that the rate of communicating data for that user is further increased.

7. Method according to one of the previous claims, wherein all the chips are of equal duration.

8. Apparatus (BS) in a TDMA/CDMA digital mobile communication system,
with signalling means (SM) arranged to
- recognize individual receiving capabilities concerning the TDMA/CDMA feature of a mobile station (MS),
with control means (SE) arranged to
- adapte a rate of communicating data via digital user signals communicated on a communication link to the mobile station (MS) which are separated from the other user signals by individual spreading codes and/or different time slots (ts),
- select at least one spreading factor (Q,..Q''''') and a number M of time slots (ts) according to the required rate of communicating data and according to said individual receiving capabilities of said mobile station (MS),
- form at least one individual spreading code with Q,..Q''''' chips, and
- allocate sequence of bits of the user signal to at least one time slot (ts),
with signal processing means (SP) arranged to
- spread the sequence of bits individually,
- form a transmit signal by combining the sequence allocated to the time slot (ts),
with transmission means (HF) arranged to
- arrange for burstwise transmission of the transmit signal.

9. Apparatus (BS) according to claim 8, wherein the signalling means (SP) communicates information to the control means (SE) representative of a request for a new rate of communicating data, and wherein,
the control means (SE) operates to update the number M of time slots (ts) of the communication link for a mobile station (MS) with only TDMA capability or update in addition the spreading factors (Q,.. Q''''') for a mobile station (MS) with CDMA capability.

10. Apparatus (BS) according to claim 8 or 9,
wherein the signalling means (SP) communicates information to the mobile station (MS) representative of a new number M of time slots (ts) and/or a new spreading factors (Q,.. Q''''') to be used for the communication link.

11. Apparatus (BS) according to one of the claims 8 to 10,
wherein the control means (SE) allocates the number M of time slots (ts) and the new spreading factors (Q,.. Q''''') for different communication links so that an averall rate of communicating data between the base station (BS) and the mobile station (MS) is maximized.

12. Apparatus (BS) according to one of the claims 8 to 11, with signalling means (SM) for supplying the receiving station (MS) with relevant information about a spreading factor (Q,.. Q''''') and/or a number of time slots (ts) depending on the required bit rate.

## Patentansprüche

1. Verfahren zur Anpassung einer Rate der Datenkommunikation über digitale Benutzersignale, die auf einer Kommunikationsverbindung zwischen einer Sendestation (BS) und einer Empfangsstation (MS) übertragen werden, wobei die Benutzersignale durch individuelle Spreizcodes (c) und/oder unterschiedliche Zeitfenster (ts) in digitalen TDMA-/CDMA-Mobilkommunikationssystemen von den Signalen getrennt sind, die auf anderen Kommunikationsverbindungen übertragen werden, das die Schritte umfasst:
- Auswahl von mindestens einem Spreizfaktor (Q,..Q''''') und einer Anzahl M an Zeitfenstern (ts) entsprechend der erforderlichen Bitrate und entsprechend der individuellen Empfangsfähigkeiten einer Empfangsstation (MS), wobei der Spreizfaktor (Q,...Q''''') die Anzahl von Chips eines Spreizcodes repräsentiert und M die Anzahl der Zeitfenster (ts) der Kommunikationsverbindung repräsentiert,
- Bilden von mindestens einem individuellen Spreizcode mit Q,...Q''''' Chips in Übereinstimmung mit dem mindestens einen ausgewählten Spreizfaktor (Q,...Q'''''),
- Zuordnen von Bitsequenzen des Benutzersignals zu dem mindestens einen ausgewählten Zeitfenster (ts),
- Spreizen der Bitsequenzen individuell in Übereinstimmung mit dem Spreizcode,
- Bilden eines Sendesignals durch die Kombination der Sequenzen, die den mindestens einen Zeitfenster (ts) zugeordnet sind, und
- Arrangieren einer Burst-Übertragung des Sendesignals.

2. Verfahren nach Anspruch 1, welche den Schritt des Signalisierens der Empfangsfähigkeit in Bezug auf die TDMA-/CDMA-Funktion zwischen den beiden Stationen (BS, MS) umfasst, vor der Auswahl des mindestens einen Spreizfaktors (Q,...Q''''') und des mindestens einen Zeitfensters (ts.

3. Verfahren nach Anspruch 1 oder 2, bei dem während einer Kommunikation eine Anforderung nach einer neuen Bitrate signalisiert wird und
für eine Empfangsstation (MS) mit nur TDMA-Fähigkeiten die Anzahl M der Zeitfenster (ts) der Kommunikationsverbindung aktualisiert wird und für eine Empfangsstation (MS) mit CDMA-Fähigkeit die Spreizfaktoren (Q, Q', Q''''') aktualisiert werden.

4. Verfahren nach Anspruch 3, wobei die neue Anzahl M der Zeitfenster (ts) und/oder der neue Spreizfaktor (Q,...Q''''') an die Empfangsstation (MS) signalisiert werden.

5. Verfahren nach Anspruch 3 oder 4, wobei der Spreizfaktor (Q,...Q''''') für eine Station (MS) mit nur TDMA-Fähigkeit auf 1 festgelegt ist.

6. Verfahren nach einem der vorgenannten Ansprüchen, wobei zwei oder mehr Spreizcodes einem Benutzer zugeordnet werden, sodass die Kommunikationsdatenrate für diesen Benutzer weiter erhöht wird.

7. Verfahren nach einem der vorgenannten Ansprüche, wobei alle Chips die gleiche Dauer haben.

8. Vorrichtung (BS) in einem digitalen TDMA-/CDMA- Mobilkommunikationssystem, mit Signalmitteln (SM) eingerichtet, um:
- individuelle Empfangsfähigkeiten in Bezug auf die TDMA-/ CDMA-Funktion einer mobilen Station (MS) zu erkennen,
mit Steuermitteln (SE), eingerichtet, um:
- eine Kommunikationsdatenrate über digitale Benutzersignale anzupassen, die auf einer Kommunikationsverbindung zur mobilen Station (MS) übertragen werden, die von den anderen Benutzersignalen durch individuelle Spreizcodes und/oder unterschiedliche Zeitfenster (ts) getrennt sind,
- mindestens einen Spreizfaktor (Q,...Q''''') und eine Anzahl M an Zeitfenstern (ts) entsprechend der erforderlichen Rate der Kommunikationsdaten und entsprechend der individuellen Empfangsfähigkeiten der mobilen Stationen (MS) auszuwählen,
- mindestens einen individuellen Spreizcode mit Q,...Q'''''-Chips zu bilden, und
- eine Bitsequenz des Benutzersignals mindestens einem Zeitfenster (ts) zuzuordnen,
mit Signalverarbeitungsmitteln (SP) eingerichtet, um:
- die Bitsequenz individuell zu spreizen,
- ein Sendesignal zu bilden, indem die Sequenz kombiniert wird, die dem Zeitfenster (ts) zugeordnet ist,
mit Übertragungsmitteln (HF) eingerichtet, um:
- das Sendesignal in Bursts zu übertragen.

9. Vorrichtung (BS) nach Anspruch 8, wobei das Signalmittel (SP) Informationen an ein Steuerungsmittel (SE) übertragen, eine Anfrage auf eine neue Rate der Kommunikationsdaten repräsentierend und wobei das Steuerungsmittel (SE) wirkt, um die Anzahl M der Zeitfenster (ts) der Kommunikationsverbindung für eine mobile Station (MS) mit nur TDMA-Fähigkeit zu aktualisieren oder um zusätzlich die Spreizfaktoren (Q,...Q''''') für eine mobile Station (MS) mit CDMA-Fähigkeit zu aktualisieren.

10. Vorrichtung (BS) nach Anspruch 8 oder 9, wobei das Signalmittel (SP) Informationen an die mobile Station (MS) überträgt, das eine neue Anzahl M der Zeitfenster (ts) und/oder einen neuen Spreizfaktor (Q,...Q''''') repräsentierend, die für die Kommunikationsverbindung verwendet werden sollen.

11. Vorrichtung (BS) nach einen der Ansprüche 8 bis 10, wobei das Steuerungsmittel (SE) die Anzahl M der Zeitfenster (ts) und die neuen Spreizfaktoren (Q,...Q''''') verschiedenen Kommunikationsverbindungen zuordnet, sodass eine Gesamtkommunikationsdatenrate zwischen der Basisstation (BS) und der mobilen Station (MS) maximiert wird.

12. Vorrichtung (BS) nach einem der Ansprüche 8 bis 11, mit Signalmitteln (SM) für die Belieferung der Empfangsstation (MS) mit relevanten Informationen über einen Spreizfaktor (Q,...Q''''') und/oder eine Anzahl der Zeitfenster (ts) je nach erforderlicher Bitrate.

## Revendications

1. Procédé d'adaptation d'un débit de données de communication par l'intermédiaire de signaux numériques d'utilisateur communiqués sur une liaison de communication entre une station (BS) d'émission et une station (MS) de réception, ces signaux d'utilisateur étant séparés de signaux communiqués sur d'autres liaisons de communication par des codes (c) individuels d'étalement et/ou par des créneaux (ts) temporels différents dans un système de communication mobile numérique TDMA/CDMA,
comprenant les stades de :
- sélection d'au moins un facteur (Q,..Q''''') d'étalement et d'un nombre M de créneaux (ts) temporels suivant le débit binaire requis et suivant les capacités individuelles de réception d'une station (MS) de réception, le facteur (Q,..Q''''') d'étalement étant représentatif d'un nombre d'éléments d'un code d'étalement et M étant représentatif d'un nombre de créneaux (ts) temporels de la liaison de communication,
- formation d'au moins un code individuel d'étalement ayant Q,..Q''''' éléments en fonction du au moins un facteur (Q,..Q''''') d'étalement sélectionné,
- allocation de séquences de bits du signal d'utilisateur au au moins un créneau (ts) temporel sélectionné,
- étalement des séquences de bits individuellement suivant le code d'étalement,
- formation d'un signal d'émission en combinant les séquences allouées au au moins un créneau (ts) temporel, et
- mise en oeuvre d'une transmission par paquets du signal émis.

2. Procédé suivant la revendication 1, comprenant le stade de signalisation des capacités de réception concernant la caractéristique TDMA/CDMA entre les deux stations (BS, MS) avant de sélectionner le au moins un facteur (Q,..Q''''') d'étalement et le au moins un créneau (ts) temporel.

3. Procédé suivant la revendication 1 ou 2,
dans lequel pendant une communication, une demande d'un nouveau débit binaire est signalé, et
pour une station (MS) de réception ayant seulement une capacité TDMA, le nombre M de créneaux (ts) temporels de la liaison de communication est mis à jour et pour une station (MS) de réception ayant une capacité CDMA, les facteurs (Q, Q', Q''''') d'étalement sont mis à jour.

4. Procédé suivant la revendication 3,
dans lequel le nouveau nombre M des créneaux (ts) temporels et/ou le nouveau facteur (Q,..Q''''') d'étalement sont signalés à la station (MS) de réception.

5. Procédé suivant la revendication 3 ou 4,
dans lequel le facteur (Q,..Q''''') d'étalement pour une station (MS) ayant seulement une capacité TDMA est fixé à 1.

6. Procédé suivant l'une des revendications précédentes,
dans lequel on alloue deux ou plusieurs codes d'étalement à un utilisateur de manière à augmenter encore le débit de données de communication pour cet utilisateur.

7. Procédé suivant l'une des revendications précédentes, dans lequel tous les éléments ont une durée égale.

8. Dispositif (BS) dans un système de communication mobile numérique TDMA/CDMA,
ayant des moyens (SM) de signalisation agencés pour
- reconnaître des capacités individuelles de réception concernant la caractéristique TDMA/CDMA d'une station (MS) mobile,
ayant des moyens (SE) de commande agencés pour
- adapter un débit de données de communication par l'intermédiaire de signaux numériques d'utilisateur communiqués sur une liaison de communication à la station (MS) mobile, qui sont distincts des autres signaux d'utilisateur par des codes individuels d'étalement et/ou par des créneaux (ts) temporels différents,
- sélectionner au moins un facteur (Q,..Q''''') d'étalement et un nombre M de créneaux (ts) temporels suivant le débit exigé de données à communiquer et suivant les capacités individuelles de réception de la station (MS) mobile,
- à former au moins un code individuel d'étalement ayant Q,..Q''''' éléments, et
- allouer une séquence de bits du signal de l'utilisateur à au moins un créneau (ts) temporel,
ayant des moyens (SP) de traitement de signal agencés pour
- étaler la séquence de bits individuellement,
- former un signal d'émission en combinant la séquence allouée au créneau (ts) temporel,
ayant des moyens (HF) d'émission agencés pour
- faire en sorte qu'il y ait une émission par paquets du signal émis.

9. Dispositif (BS) suivant la revendication 8,
dans lequel les moyens (SP) de signalisation communiquent de l'information aux moyens (SE) de commande représentative d'une demande d'un nouveau débit de données à communiquer et, dans lequel
les moyens (SE) de commande fonctionnent pour mettre à jour le nombre M de créneaux (ts) temporels de la liaison de communication pour une station (MS) mobile ayant seulement une capacité TDMA ou pour mettre à jour, en outre, les facteurs (Q,..Q''''') d'étalement pour une station (MS) mobile ayant une capacité CDMA.

10. Dispositif (BS) suivant la revendication 8 ou 9,
dans lequel les moyens (SP) de signalisation communiquent de l'information à la station (MS) mobile représentative d'un nouveau nombre M de créneaux (ts) temporels et/ou d'un nouveau facteur (Q,..Q''''') d'étalement à utiliser pour les liaisons de communication.

11. Dispositif (BS) suivant l'une des revendication 8 à 10,
dans lequel les moyens (SE) de commande allouent le nombre M de créneaux (ts) temporels et les nouveaux facteurs (Q,..Q''''') d'étalement pour des liaisons de communication différentes de façon à maximiser un débit global de données de communication entre la station (BS) de base et la station (MS) mobile.

12. Dispositif (BS) suivant l'une des revendication 8 à 11, comprenant des moyens (SM) de signalisation pour envoyer à la station (MS) de réception de l'information pertinente sur un facteur (Q,..Q''''') d'étalement et/ou sur un nombre de créneaux (ts) temporels en fonction du débit binaire demandé.
